# EUROPÄISCHE PATENTSCHRIFT

(11) **EP 3 561 846 B1**
(45) Veröffentlichungstag und Bekanntmachung des Hinweises auf die Patenterteilung: **11.10.2023**
(21) Anmeldenummer: 18169856.4
(22) Anmeldetag: 27.04.2018
(51) Int. Cl.: H01H 33/664, H01H 79/00, H01J 21/08, H01T 2/00, H01T 21/06, H02H 9/06

(54) **VAKUUM-LEISTUNGSSCHALTER**
VACUUM CIRCUIT BREAKER
DISJONCTEUR À VIDE

(43) Veröffentlichungstag der Anmeldung: 30.10.2019
(73) Patentinhaber: Siemens Energy Global GmbH & Co. KG, 81739 München (DE)
(72) Erfinder: Schacherer, Christian, 91352 Hallerndorf (DE); Rettenmaier, Thomas, 91052 Erlangen (DE); Wenzel, Norbert, 91056 Erlangen (DE)

(56) Entgegenhaltungen:
- GB-A- 787 846
- US-A- 3 321 598
- US-A- 3 489 873
- US-A- 3 679 474
- US-A- 3 816 798
- US-A1- 2011 315 662

## Beschreibung

Die Erfindung betrifft eine Verwendung einer Vakuumleistungsschaltröhre.

Bei verschiedenen Anlagen zur Steigerung oder Steuerung der Übertragungsleistung von Hochspannungsnetzen wie zum Beispiel Serienkompensationsanlagen (engl. Fixed Series Capacitor - FSC) oder bei Lastflussreglern (Universal Power Flow Control - UPFC oder APCU) müssen Schutzeinrichtungen im Falle eines Netzfehlers, zum Beispiel eines Kurz- oder Erdschlusses vorgesehen werden. Der Schutz besteht aus einem Überspannungsableiter und einem Bypass Strompfad, der elektrisch leitend geschlossen wird, wenn ein Netzfehler auftritt. Maßgeblich für die Schutzwirkung ist eine möglichst schnelle Reaktion im Falle eines Netzfehlers. Typischerweise sollte der Bypass Strompfad innerhalb von zwei Millisekunden (ms) geschlossen sein und den Fehlerstrom anschließend über eine Zeit von einigen Sekunden tragen können.

Gemäß des Standes der Technik werden für die beschriebenen beispielhaften Anwendungen meist Leistungshalbleiter oder eine Kombination aus einer Funkenstrecke, eines sogenannten Spark-Gap, und Leistungsschaltern eingesetzt. Dabei sind Leistungshalbleiter vergleichsweise kostenintensiv, da sie für den Kurzschlussstrom über eine für sie vergleichsweise lange Zeit ausgelegt werden müssen. Die ebenfalls angewandte parallele Anordnung aus einem Spark-Gap und einem Leistungsschalter benötigt hingegen einen sehr großen Bauraum. Außerdem ist das Spark-Gap durch seine offene Bauweise anfällig gegen Umwelteinflüsse wie beispielsweise das Vereisen oder einer Staubbelastung.

Die Aufgabe der Erfindung besteht darin, für den Fall eines Kurzschlusses eine sehr schnelle und zuverlässige Herstellung eines elektrischen Kontaktes zu ermöglichen.

Die Lösung der Aufgabe besteht in einer Verwendung einer Vakuumleistungsschaltröhre gemäß dem Patentanspruch 1.

Bei der erfindungsgemäßen Verwendung umfasst die Vakuum-Leistungsschaltröhre ein Vakuumgehäuse, in dem ein Kontaktsystem angeordnet ist. Das Kontaktsystem weist dabei zwei Kontakte auf, die zueinander beweglich angeordnet sind. Der Vakuum-Leistungsschalter zeichnet sich dadurch aus, dass eine elektrische Vorzündeinrichtung vorgesehen ist, die eine in der Leistungsschaltröhre angeordnete Zündelektrode zur Zündung eines Lichtbogens entlang eines Lichtbogenstrompfades aufweist.

Beim Auftreten eines Netzfehlers wird, ausgelöst durch die Vorzündeinrichtung, zunächst ein Isolierabstand zwischen den Dauerstromkontakten des Vakuum-Leistungsschalters elektrisch durch das Zünden eines Lichtbogens überbrückt. Es kommt dabei naturgemäß zu keiner mechanischen Berührung von Lichtbogenkontakten. Während der Lichtbogen den Strom, wobei man hier auch von einem Fehlerstrom sprechen kann, leitet und damit der Lichtbogenstrompfad elektrisch geschlossen ist, werden währenddessen die Dauerstromkontakte, also die eigentlich stromführenden Kontakte, geschlossen. Dies erfolgt über einen schnellen, idealerweise prellfreien mechanischen Antrieb aus dem Stand der Technik. Dabei wirkt die Vorzündeinheit durch Zünden des Lichtbogenstrompfades ähnlich wie ein bekanntes Spark-Gap. Diese Zündvorrichtung ist jedoch anders als im Stand der Technik mit zueinander beweglich angeordneten Kontakten direkt in eine Vakuum- Leistungsschalterröhre integriert. Im Gegensatz zu getriggerten Vakuumschaltern, Triggered Vacuum Switches - TVS, die auch eine integrierte Zündvorrichtung, aber ausschließlich feste Kontakte besitzen, erlaubt die erfindungsgemäße Anordnung eine für den Dauerstrombetrieb vorteilhafte mechanische Berührung von Kontakten. Die erfindungsgemäße Anordnung bewirkt eine günstige Bauweise unter Verwendung einer herkömmlichen Vakuum- Leistungsschalterröhre, die gegenüber der Anordnung des Standes der Technik einen kleineren Bauraum benötigt und dabei unempfindlich gegenüber Umwelteinflüssen ist.

Gemäß DIN-Norm 28 400 bezeichnet man als Vakuum ein verdünntes Gas oder den entsprechenden Zustand, bei dem der Druck oder die Dichte kleiner ist, als die der umgebenden Atmosphäre. Das bedeutet, wenn der Druck in einem Behälter, niedriger ist als der Druck der Atmosphäre, also der Luft, die ihn umgibt, dann herrscht in diesem Behälter ein Vakuum. Bevorzugt herrscht in einer Vakuum-Schaltröhre ein Hochvakuum mit einem Druck von weniger als 10⁻³ hPa vor.

Ein Vakuum-Leistungsschalter umfasst eine Vakuumröhre bzw. Leistungsschaltröhre genannt und einen Antrieb.

Gemäß der Erfindung weist das Kontaktsystem mit seinen beiden Kontakten zwei geometrisch getrennte Strompfade auf. Dabei ist ein erster Strompfad der bereits beschriebene Lichtbogenstrompfad und der zweite Strompfad ein Dauerstrompfad. Diese Anordnung weist den Vorteil auf, dass Kontaktflächen des Dauerstrompfades durch die vorherige Ausbildung eines Lichtbogens in ihrer Oberfläche nicht beschädigt werden. Es kommt nicht zu einem unerwünschten Aufschmelzen und Verschweißen zwischen den Kontaktflächen der Dauerkontakte. Der Dauerstrompfad entsteht durch tatsächliches mechanisches Berühren der Kontakte und ist dazu geeignet, dauerhaft große Ströme, neben Nennströmen auch Fehler- oder Kurzschlussströme zu tragen.

Um Oberflächeneffekte (z.B. unerwünschtes Verschweißen der Kontakte) weiterhin zu unterbinden, ist es gemäß der Erfindung ferner zweckmäßig, dass Kontaktflächen des Lichtbogenkontaktes in einem geschlossenen Zustand des Leistungsschalters berührungslos zueinander angeordnet bleiben. In einem geschlossenen Zustand berühren sich lediglich die Kontaktflächen des Dauerstrompfades. Über diese wird dann im geschlossenen Zustand auch der Strom geleitet, über die sich nicht berührenden Kontaktflächen des Lichtbogenstrompfades fließt kein Strom mehr.

Dabei ist es zweckmäßig, wenn die Kontaktflächen des Lichtbogenstrompfades größer, bevorzugt zweimal so groß sind wie die Kontaktflächen des Dauerstrompfades.

Gemäß der Erfindung weisen die beiden Kontakte entlang einer Schaltachse fingerartige Fortsätze auf, wobei die Fortsätze der beiden Kontakte ineinander greifen. Diese fingerartige Anordnung der Kontakte ermöglicht es, mit geringem Aufwand den Lichtbogenstrompfad und den Dauerstrompfad zu trennen. Dies ist insbesondere dann zweckmäßig, wenn Flanken der fingerartigen Fortsätze Kontaktflächen des Lichtbogenstrompfades umfassen. Ferner ist es dabei zweckmäßig, wenn diese Flanken, die den Lichtbogenkontakt ausbilden, nicht absolut parallel, sondern in einem spitzen Winkel zueinander angeordnet sind.

In einem Beispiel, das nicht Teil der Erfindung ist, ist mindestens einer der Kontakte topfförmig ausgestaltet, und ein Kontaktstück des Lichtbogenstrompfades ist im Zentrum des topfförmigen Kontaktes angeordnet. Unter dem Begriff topfförmig wird dabei jegliche Art eines Kontaktes, bevorzugt aber nicht notwendigerweise mit kreisförmigem Querschnitt verstanden, der im Zentrum der Kontaktfläche eine Aussparung oder Vertiefung aufweist, so dass im Bereich dieser Aussparung oder Vertiefung kein Kontakt zwischen den beiden Kontaktflächen der beiden Kontakte stattfindet. Dabei kann entweder einer oder beide Kontakte diese topfförmige Form aufweisen. Die Aussparung oder Vertiefung im Zentrum des Kontaktes, die die Topfform definiert, ist dafür geeignet, das Kontaktstück des Lichtbogenstrompfades zu beherbergen. Somit verläuft der Lichtbogenstrompfad in diesen Fall getrennt vom Dauerstrompfad durch das Zentrum mindestens eines Kontaktes. Die Konstruktion hat den Vorteil, dass gegenüber herkömmlichen Kontaktsystemen nur eine geringe technische Abänderung notwendig ist, indem in die Mitte eines Kontaktes eine Aussparung und ein zusätzlicher Lichtbogenkontakt eingebracht werden. Ansonsten kann ein übliches Kontaktsystem verwendet werden.

Grundsätzlich ist es zweckmäßig, wenn die Zündelektrode bereits ein Kontaktstück des Lichtbogenstrompfades darstellt, da auf diese Weise der Lichtbogenstrompfad in einfacher Weise definiert werden kann. In einem Beispiel, das kein Teil der Erfindung ist, kann es auch zweckmäßig sein, dass die Zündelektrode außerhalb der Kontakte angebracht ist, insbesondere an einem Dampfschild, das das Kontaktsystem in der Regel konzentrisch umgibt. Hierbei können eine oder mehrere Zündelektroden angebracht werden.

Gemäß der Erfindung ist eine Verwendung einer Vakuum-Leistungsschaltröhre für eine Kurzschließvorrichtung zum Kurzschließen eines Stromkreises und damit zum Schutz einer Netzbeeinflussungsanlage vor einer Überspannung vorgeschlagen. Unter einer Netzbeeinflussungsanlage wird hierbei beispielsweise eine Serienkompensationsanlage oder einen vereinheitlichten Leistungsflussregler verstanden. Beide sind Systeme, die zur Beeinflussung eines Stromnetzes dienen, die im Falle eines Kurzschlusses innerhalb kürzester Zeit stromfrei oder spannungsfrei geschaltet werden müssen, um eine Beschädigung dieser Systeme zu vermeiden. Ein beschriebener Schalter ist durch seine zügige Ausbildung eines Lichtbogenstrompfades besonders gut geeignet, eine Netzbeeinflussungsanlage sehr schnell vom Stromnetz zu trennen und somit deren Beschädigung vorzubeugen.

Vorteilhafte Ausgestaltungsformen der Erfindung und weitere Merkmale werden anhand der folgenden Figuren näher beschrieben. Dabei handelt es sich um schematische, rein exemplarische Ausgestaltungsformen, die keine Einschränkung des Schutzbereiches darstellen. Dabei zeigen:
- Figur 1: ein Kontaktsystem mit zwei Kontakten mit Kontaktfingern in geöffneten Zustand,
- Figur 2: das Kontaktsystem aus Figur 1 im geschlossenen Zustand,
- Figur 3: einen Querschnitt durch ein Kontaktsystem gemäß Figur 1 oder Figur 2,
- Figur 4: einen alternativen Querschnitt durch ein Kontaktsystem gemäß Figur 1 und Figur 2,
- Figur 5: eine Vakuum-Leistungsschalterröhre mit einem Kontaktsystem und einem topfförmigen Kontakt mit einer im Zentrum angeordneten Zündelektrode, die kein Teil der Erfindung ist,
- Figur 6: eine analoge Leistungsschalterröhre gemäß Figur 5 mit zwei topfförmigen Kontakten, die kein Teil der Erfindung ist,
- Figur 7: eine analoge Leistungsschalterröhre gemäß Figur 6 mit einer Opferelektrode und einer gegenüber liegenden Kontaktaussparung, die kein Teil der Erfindung ist, und
- Figur 8: eine Vakuum-Leistungsschalterröhre mit einer Zündelektrode an einem Dampfschild, die kein Teil der Erfindung ist.

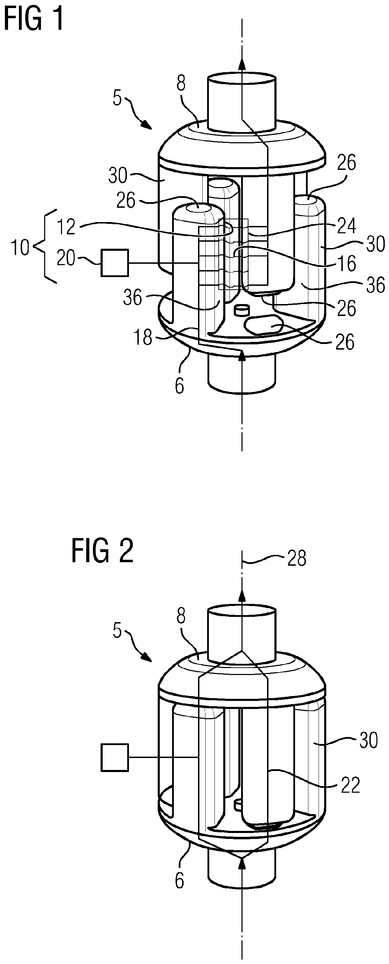

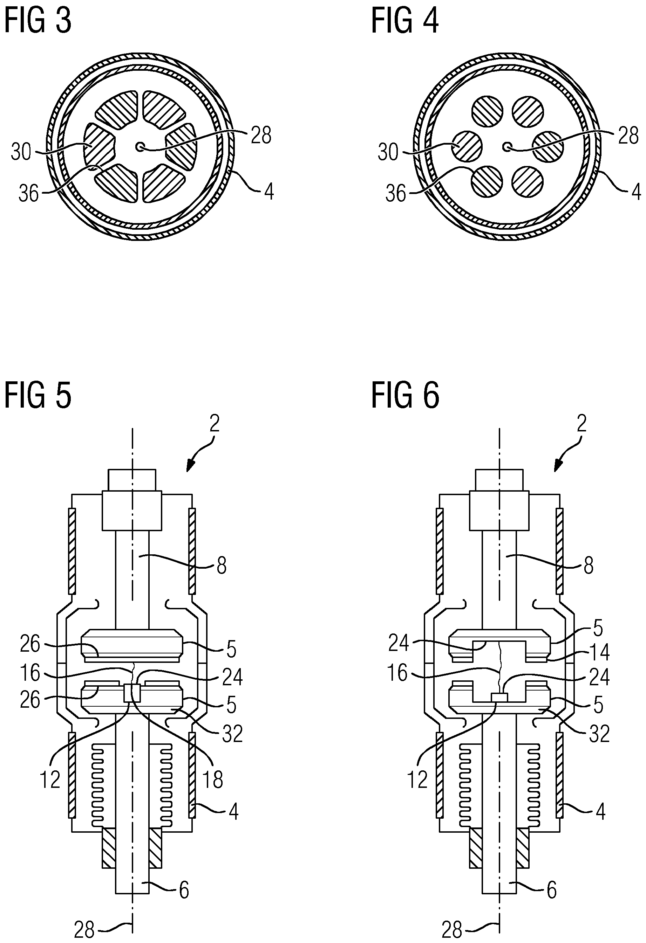

In den Figuren 1 und 2 ist jeweils ein Kontaktsystem 5 einer Vakuum-Leistungsschalterröhre 2 dargestellt. Der Einfachheit halber ist in diesen Figuren lediglich das Kontaktsystem gezeigt, ein grundsätzlicher schematischer Querschnitt durch eine Vakuum-Leistungsschalterröhre 2 ist in den Figuren 5-8 gegeben. Grundsätzlich ist das Kontaktsystem 5 gemäß der Figuren 1 und 2 in analoger Weise in einer Vakuum-Leistungsschalterröhre 2 gemäß Figur 5 integrierbar.

Die Vakuum-Leistungsschalterröhre 2 weist dabei ein Gehäuse 4 auf, das in den Figuren 1 und 2 wie bereits dargelegt, der Einfachheit halber nicht dargestellt ist. In diesem Gehäuse 4 liegt ein Vakuum vor, was bedeutet, dass in diesem Bereich ein gegenüber dem Atmosphärendruck erniedrigter Druck vorherrscht, bevorzugt liegt ein Hochvakuum vor. In der beschriebenen Vakuum-Leistungsschalterröhre 2 liegt im Gegensatz zu Gasleistungsschaltern bevorzugt kein Löschgas und kein Isoliergas vor. In diesem Fall ist der den Fehlerstrom tragende Lichtbogen ein sogenannter Vakuumlichtbogen, der durch das Material der Kontakte bzw. der Vorzündeinrichtung im Lichtbogenstrompfad gespeist wird. Allgemein kann der Lichtbogen auch ein in einem Gas geringen Drucks (kleiner als Atmosphärendruck, s.o.) brennender Lichtbogen sein.

Das Kontaktsystem 5 weist zwei Kontakte auf, grundsätzlich könnten beide Kontakte als Bewegkontakt ausgestaltet sein, in der Regel wird jedoch nur ein Kontakt 6 als Bewegkontakt ausgestaltet, ein zweiter Kontakt ist ein Festkontakt 8. Dabei ist der Bewegkontakt 6 mit einem hier nicht dargestellten Antrieb verbunden.

Die Kontakte 6 und 8 in den Figuren 1 und 2 weisen dabei fingerartige Fortsätze 30 auf, die entlang einer Schaltachse 28 ausgerichtet sind. Diese Fortsätze 30 greifen ineinander, wobei in den Figuren 3 und 4 jeweils ein Querschnitt des Kontaktesystems 5 aus den Figuren 1 und 2 gegeben ist. Hier sind unterschiedliche mögliche Querschnitte der Fortsätze 30 dargestellt, wobei in den Figuren 3 und 4 auch noch das vakuumdichte Gehäuse 4 der Vakuum-Leistungsschalterröhre 2 ergänzend dargestellt ist. In den Beispielen der Figuren 1-4 sind von jedem Kontakt drei fingerartige Fortsätze 30 dargestellt, grundsätzlich kann die Anzahl selbstverständlich variieren. Es kann auch zweckmäßig sein, dass jeder Kontakt lediglich einen Fortsatz 30 aufweist, dieser kann dann beispielsweise jeweils einen halbringförmigen Querschnitt aufweisen.

Ferner ist die Vakuum-Leistungsschalterröhre mit einer Vorzündeinrichtung 10 ausgestattet, wobei die Vorzündeinrichtung 10 zumindest eine Zündelektrode 12 aufweist und bevorzugt eine Zündelektronik 20, die im Falle eines Kurzschlusses, wenn der Schalter sehr schnell geschlossen werden muss, ein elektrisches Signal an die Zündelektrode 12 liefert. Diese bewirkt, dass im Bereich von Kontaktflächen 24 für einen sogenannten Lichtbogenstrompfad 18 elektrische Ladungen anliegen und es zu einem lichtbogenförmigen Überschlag zwischen zwei Kontaktflächen 24 kommt. Beim Auftreten eines Netzfehlers wird somit zunächst der Kontakt durch den wie beschrieben gezündeten Lichtbogen 16 überbrückt. Während der Lichtbogen 16 den Strom leitet, werden dann die Kontakte 6 und 8 durch den mechanischen Antrieb mechanisch geschlossen, wobei es zum Kontakt zwischen Kontaktflächen 26 eines Dauerstrompfades 22 kommt.

Diese Abfolge ist daher zweckmäßig, da der Lichtbogen 16 schneller (in weniger als 2 ms) gezündet werden kann und somit für eine kurze Zeit über diesen der Strom fließen kann, bis der etwas langsamere mechanische Kontakt geschlossen ist.

Auf diese Weise wird in einem integrierten Schalter eine ähnliche Wirkung erzielt, wie dies gemäß des Standes der Technik aus der Kombination eines sogenannten Spark-Gaps mit einem Leistungsschalter bereits der Fall ist. Es wird jedoch durch die beschriebene Konstruktion ein deutlich geringerer Bauraum benötigt, gleichzeitig ist die Vakuum-Leistungsschalterröhre 2 deutlich weniger anfällig gegenüber Umwelteinflüssen als das beispielsweise ein sogenannter Spark-Gap ist.

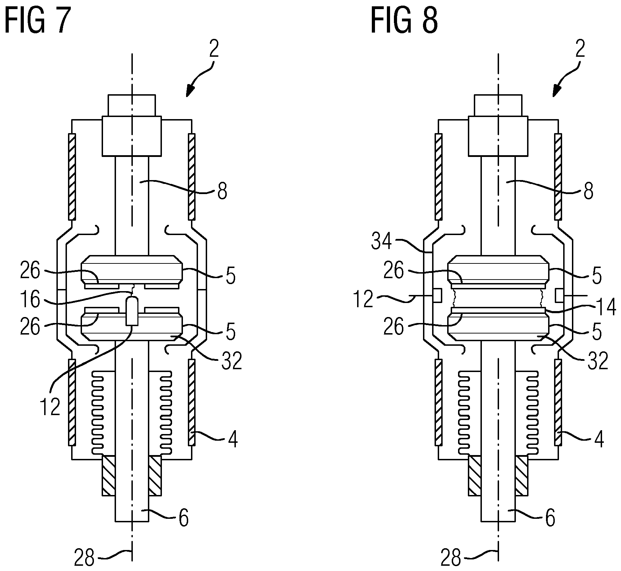

In einem Beispiel, das kein Teil der Erfindung wäre, wäre grundsätzlich möglich, den Lichtbogenstrompfad 18 und den Dauerstrompfad 22 geometrisch zu vereinen. Das heißt, ähnlich wie dies in Figur 8 beschrieben ist, könnte der Lichtbogen 10 zwischen zwei plattenförmig ausgestalteten Kontaktflächen 26 der Kontakte 6 und 8 erfolgen. Durch das Ausbrennen der Kontaktflächen 26 mit dem Lichtbogen 16 entsteht jedoch an der Oberfläche eine Schmelzzone, so dass beim Schließen der Kontakte 6 und 8 die Kontaktflächen 26 miteinander verschweißen können. Beim Wiederöffnen wird diese Verschweißung aufgerissen und es entstehen mikroskopisch feine nadelförmige Oberflächenrauigkeiten, die das elektrische Feld beim Öffnen und Schließen der Kontakte 6 und 8 negativ beeinflussen können.

Aus diesem Grund ist es zweckmäßig, dass, wie in den Figuren 1 und 2 dargestellt, der Lichtbogenstrompfad 18 vom Dauerstrompfad 22 geometrisch getrennt ist. Der Lichtbogenstrompfad 18 ist in Figur 1 dargestellt. Er verläuft entlang der Fortsätze 30 und der Lichtbogenstrompfad 16 springt dann über Flanken 36 der Fortsätze 30 an Kontaktflächen 24 des Lichtbogenstroms der korrespondierenden Flanke 36 und der korrespondierenden Kontaktfläche 24 über. In Figur 2 ist der geschlossene Zustand des Kontaktsystems 5 dargestellt, der Lichtbogen 16 zwischen den Flanken 36 ist erloschen, der Strom fließt über den Dauerstrompfad 22, wobei sich die Kontaktflächen 26 der beiden Kontakte 6 und 8 berühren. Dieser Stromfluss ist nun dauerhaft stabil.

Gegenüber dem Stand der Technik wird hierbei in einem Schalter integriert zunächst ein Lichtbogen geschaltet, der sehr schnell zu einem Stromfluss führt, bis der langsamere mechanische Schaltvorgang über den Dauerstrompfad bereitgestellt ist. Der Dauerstrompfad 22 und der Lichtbogenstrompfad 18 sind hierbei geometrisch voneinander getrennt, was durch Anordnung der fingerartigen Fortsätze 30 gestaltet werden kann. Im geschlossenen Zustand des Kontaktsystems 5 sind die Kontaktflächen 24 für den Lichtbogenstrompfad 18 nicht miteinander in Berührung. Somit kommt es auch zu keinem Verschweißen zwischen den einzelnen Kontaktflächen 24 des Lichtbogenstrompfades.

In einem weiteren, hier nicht dargestellten Beispiel, das kein Teil der Erfindung ist, sind anstelle von geraden fingerartigen Fortsätzen 30 die Fortsätze helixförmig ineinander gesteckt. In diesem Beispiel berühren sich die Kontakte durch eine axiale Bewegung mit den Seitenflächen. Bei diesem Beispiel sind die Strompfade während der Lichtbogenphase und der Dauerstromphase nahezu identisch. Diese hier nicht dargestellte Helix kann sich auch auf einer Stützstruktur befinden, zum Beispiel ausgestaltet in Form von helixförmigen Nuten auf jeweils einer Rohrinnen- und einer Rohraußenseite, die ineinander gesteckt sind. Grundsätzlich werden neben einer helixförmigen Form auch komplexere geometrische Formen der fingerartigen Fortsätze 30 beispielsweise in Form von Schwalbenschwanzstrukturen möglich.

Wieder in einem anderen nicht dargestellten Beispiel, das kein Teil der Erfindung ist, werden die Kontakte des Kontaktsystems anstelle einer axialen Bewegung durch eine rotatorische Bewegung geschlossen. Die Kontaktform kann dabei prinzipiell alle zuvor genannten Formen mit einschließen. Die rotatorische Bewegung kann bei helixförmigen Kontakten auch in eine axiale Bewegung übergehen.

In den Figuren 5-8 ist dabei eine Vakuum-Leistungsschalterröhre 2 dargestellt, die einer gewöhnlichen Vakuumröhre eines gewöhnlichen Leistungsschalters entspricht und kein Teil der Erfindung ist. Die den Dauerstrom tragenden, zu einander bewegliche Kontakte können grundsätzlich als Plattenkontakte, Axialmagnetfeldkontakte, Radialmagnetfeldkontakte oder Fingerkontakte ausgeführt sein. Das den Fehlerstrom tragende Kontaktsystem 5 sollte gewährleisten, dass der Lichtbogen 16 nicht vom Lichtbogenstrompfad 18 in den Dauerstrompfad kommutieren kann. Wenn dies gewährleistet ist, ist ein in Richtung des Zündlichtbogens überlagertes Axialmagnetfeld von Vorteil. Dies dient dazu, einen kontrahierten Lichtbogen 10 zu verhindern. Grundsätzlich sind aber auch sogenannte Radialmagnetfeld Kontakte möglich. Grundsätzlich sind die beschriebenen Kontaktformen prinzipiell in der Lage, einen Stromfluss durch Öffnen der Kontakte zu unterbrechen. Gleichzeitig sind sie insbesondere in der Lage, einen Stromfluss wie bereits beschrieben durch Schlie-ßen sehr schnell herzustellen. Die bereits bezüglich der Figuren 1 und 2 beschriebenen Zündelektrode 12 ist bevorzugt im Zentrum eines der beiden Kontakte 6 oder 8 angeordnet. Die die Zündelektrode 12 ansteuernde Zündelektronik 20 ist bevorzugt getrennt von der Zündelektrode 12 ggf. auch außerhalb des Vakuumschalters angeordnet. Vorteilhaft ist ein Einbau der Zündelektrode in den Festkontakt 8.

Die Figuren 5, 6 und 7 weisen zumindest einen topfförmigen Kontakt 32 auf wobei hier der Begriff topfförmig weit ausgelegt wird, in Figur 5 ist hierbei lediglich eine kleine Aussparung im Zentrum des Kontaktes 6 vorgesehen. Die Topfform gemäß Figur 6 ist deutlich intensiver ausgeprägt mit einer stärkeren Vertiefung und einem schmaleren Rand. Ferner sind in Figur 6 beide Kontakte 6 und 8 topfförmig ausgestaltet. Die Zündelektrode 12 ist jeweils im Zentrum eines Kontaktes dargestellt. Sowohl in der Figur 5 als auch in der Figur 6 und auch in der Figur 7 verläuft der Lichtbogenstrompfad 18 dabei durch das Zentrum zwischen den Kontakten 6 und 8 und ist dabei vom Dauerstrompfad 22 geometrisch getrennt. Der Dauerstrompfad 22 ist in den Figuren 5-7 nicht explizit dargestellt, da das Kontaktsystem 5 lediglich in geöffneter Form gezeigt ist. Der Dauerstrompfad 22 des Kontaktsystems 5 gemäß der Figuren 5-7 verläuft dann über die äußeren Kontaktbereiche der Kontaktflächen 26 zwischen den Kontakten 5 und 32.

Die Figur 7 zeigt dabei eine weitere Modifikation, in der die Zündelektrode 12 als eine widerstandsfähige Opferelektrode oder in einem hier nicht dargestellten widerstandsfähigen Kontaktstift ausgeführt ist. Diese Opferelektrode dient als Fußpunkt eines kontrahierten Lichtbogens nach dem Zünden der Vorzündeinrichtung, bis die Dauerstromkontaktflächen 26 geschlossen sind.

Alternativ kann die Zündelektrode 12, wie in Figur 8 dargestellt, auch außerhalb der Kontakte 6, 8 angeordnet sein, dies ist im Fall der Figur 8 durch das Anbringen der Zündelektroden 12 an einem Dampfschild 34 ausgeführt. Der gezündete oder brennende Lichtbogen 16 verläuft dann je nach geometrischer Ausgestaltung der Kontakte 6, 8 am äußersten Rand der Kontaktflächen 26. Bei einer geschickten geometrischen Ausgestaltung der Kontakte 32 kann der Lichtbogen 16 gemäß Figur 8 so eingestellt werden, dass auch hier der Lichtbogenstrompfad 18 und der Dauerstrompfad 22 geometrisch getrennt sind. Das bedeutet, dass die Bereiche der Kontaktflächen 24, in denen der Lichtbogen 16 überspringt, bei geschlossenem Kontaktsystem 5 nicht aufeinandertreffen und keinen physikalischen Kontakt herstellen, so dass es an dieser Stelle nicht zur unerwünschten Verschweißungen kommt.

Bei einer Anwendung der beschriebenen Vakuum-Leistungsschalterröhre in einem Wechselstromnetz sollte bevorzugt die Vorzündvorrichtung 10 derart ausgeführt werden, dass ein bipolares Vorzünden ermöglicht wird. Das würde bedeuten, dass der Lichtbogen 16 nicht beim Durchlauf des Stromnulldurchganges automatisch erlischt, sondern dass dieser wieder neu aufgebaut wird. Außerdem ist eine Vorzündung sowohl in der positiven als auch in der negativen Stromhalbwelle möglich. Dies ist auch dadurch zu erzielen, dass das Kontaktsystem 5 auf beiden Seiten eine Zündelektrode 12 aufweist die mit jeweils einer oder einer gemeinsamen Zündelektronik 20 korrespondiert. Durch Erkennen der Polarität des Netzes oder durch gleichzeitiges Zünden beider Vorzündeinrichtungen 10 kann der Lichtbogen 16 gezündet werden. Eine weitere Möglichkeit für bipolares Zünden besteht auch in der starken Erhöhung der Zündspannung, wobei diese wesentlich größer als die doppelte Netzamplitude sein soll, so dass auch bei einer umgekehrten Polarität ein Lichtbogen gezündet wird.

Um den Strom länger als eine Halbwelle zu tragen, zum Beispiel bei langsam schließenden Dauerstromkontakten, kann anstelle des Einsatzes einer zweiten Vakuumröhre mit umgekehrter Polarität die Ausschaltfähigkeit des Kontaktsystems 5 deutlich reduziert werden. Sie kann als eine Röhre für einen Wechselstrom verwendet werden, da der Strom nach dem Nulldurchgang nicht dauerhaft unterbrochen wird. Dies setzt voraus, dass beim Einschaltzeitpunkt der Strom die richtige Polarität für den Vakuum-Leistungsschalter besitzt.

Für die beschrieben Vakuum Leistungsschalterröhre sind entsprechende schnelle Antriebe bevorzugt prellfreier Antrieb vorteilhaft. Ein prellfreier Antrieb kann insbesondere dadurch erzielt werden, dass die kinetische Energie des Bewegkontaktes beim Auftreffen auf den Festkontakt in einer hier nicht dargestellten Federvorrichtung der Antriebseinheit (hierrunter fallen mechanische Federn oder Gasdruckfedern) zwischengespeichert wird.

### Bezugszeichenliste

- 2: Vakuum-Leistungsschalterröhre
- 4: Vakuumgehäuse
- 5: Kontaktsystem
- 6: Bewegkontakt
- 8: Festkontakt
- 10: Vorzündeinrichtung
- 12: Zündelektrode
- 14: Kontaktstück
- 16: Lichtbogen
- 18: Lichtbogenstrompfad
- 20: Zündelektronik
- 22: Dauerstrompfad
- 24: Kontaktflächen Lichtbogenstrompfad
- 26: Kontaktflächen Dauerstrompfad
- 28: Schaltachse
- 30: fingerartige Fortsätze
- 32: topfförmiger Kontakt
- 34: Dampfschild
- 36: Flanken der Fortsätze

## Patentansprüche

1. Verwendung einer Vakuumleistungsschaltröhre (2) für eine Kurzschließvorrichtung zum Kurzschließen eines Stromkreises und damit zum Schutz einer Netzbeeinflussungsanlage vor einer Überspannung, wobei die Vakuumleistungsschaltröhre (2), ein Vakuumgehäuse (4) umfasst, in dem ein Kontaktsystem (5) angeordnet ist, das zwei Kontakte (6, 8) aufweist, die zueinander beweglich angeordnet sind, wobei eine elektrische Vorzündeinheit (10) mit einer im Vakuumgehäuse angeordneten Zündelektrode zur Zündung eines Lichtbogens (16) entlang eines Lichtbogenstrompfades (18) vorgesehen ist **dadurch gekennzeichnet, dass** die beiden Kontakte (6, 8) zwei geometrisch getrennte Strompfade (18, 22) aufweisen, wobei ein erster Strompfad der Lichtbogenstrompfad (18) ist und ein zweiter Strompfad ein Dauerstrompfad (22) ist und die beiden Kontakte entlang einer Schaltachse (28) fingerartige Fortsätze (30) aufweisen, wobei die Fortsätze (30) der beiden Kontakte (6, 8) ineinander greifen und Flanken der fingerartigen Fortsätze Kontaktflächen des Lichtbogenstrompfades umfassen, die Kontakte mit den fingerartigen Fortsätzen entlang einer Schaltachse ausgerichtet sind und es im geschlossenen Zustand zum Kontakt zwischen Kontaktflächen des Dauerstrompfades kommt und Kontaktflächen (24) des Lichtbogenstrompfades (18) in einem geschlossenem Zustand des Leistungsschalters (2) berührungslos zueinander angeordnet sind.

2. Verwendung einer Vakuumleistungsschaltröhre nach Anspruch 1, **dadurch gekennzeichnet, dass** ein Kontaktstück des Lichtbogenstrompfades (18) die Zündelektrode (12) umfasst.

3. Verwendung einer Vakuumleistungsschaltröhre nach Anspruch 1, **dadurch gekennzeichnet, dass** Kontaktflächen (24) des Lichtbogenstrompfades (18) eine größere Oberfläche als die Kontaktflächen des Dauerstrompfades aufweisen.

4. Verwendung einer Vakuumleistungsschaltröhre nach Anspruch 3, **dadurch gekennzeichnet, dass** die Kontaktflächen (24) des Lichtbogenstrompfades (18) eine mindestens zweimal größere Oberfläche als die Kontaktflächen des Dauerstrompfades aufweist.

## Claims

1. Use of a vacuum circuit breaker tube (2) for a short-circuiting device for shorting a circuit and thus for protecting a grid influencing system from a surge, the vacuum circuit breaker tube (2) comprising a vacuum housing (4) in which there is arranged a contact system (5) that has two contacts (6, 8) arranged so as to move relative to one another, wherein there is provision for an electrical pre-arcing unit (10) having an ignition electrode, arranged in the vacuum housing, for igniting an arc (16) along an arc current path (18), **characterized in that** the two contacts (6, 8) have two geometrically separated current paths (18, 22), wherein a first current path is the arc current path (18) and a second current path is a continuous current path (22) and the two contacts have fingerlike extensions (30) along a switching axis (28), wherein the extensions (30) of the two contacts (6, 8) engage with one another and flanks of the fingerlike extensions comprise contact surfaces of the arc current path, the contacts with the fingerlike extensions are oriented along a switching axis and contact is made between contact surfaces of the continuous current path in the closed state, and contact surfaces (24) of the arc current path (18) in a closed state of the circuit breaker (2) are arranged with no contact with respect to one another.

2. Use of a vacuum circuit breaker tube according to Claim 1, **characterized in that** a contact piece of the arc current path (18) comprises the ignition electrode (12).

3. Use of a vacuum circuit breaker tube according to Claim 1, **characterized in that** contact surfaces (24) of the arc current path (18) have a larger surface than the contact surfaces of the continuous current path.

4. Use of a vacuum circuit breaker tube according to Claim 3, **characterized in that** the contact surfaces (24) of the arc current path (18) have a surface that is at least twice as large as the contact surfaces of the continuous current path.

## Revendications

1. Utilisation d'un tube (2) disjoncteur à vide pour un dispositif de court-circuit pour court-circuiter un circuit et protéger ainsi d'une surtension une installation influençant un réseau, dans lequel le tube (2) disjoncteur à vide comprend un boîtier (4) sous vide, dans lequel est disposé un système (5) de contact, qui a deux contacts (6, 8), qui sont montés mobiles l'un par rapport à l'autre, dans lequel il est prévu une unité (10) de pré-amorçage électrique ayant une électrode d'amorçage montée dans le boîtier sous vide pour l'amorçage d'un arc (16) électrique le long d'un chemin (18) de courant d'arc électrique, **caractérisé en ce que** les deux contacts (6, 8) ont des chemins (18, 22) de courant séparés géométriquement, dans lequel un premier chemin du courant est le chemin (18) de courant de l'arc électrique et un deuxième chemin de courant est un chemin (22) de courant permanent et les deux contacts ont des prolongements (30) de type en doigt le long d'un axe (28) de coupure, dans lequel les prolongements (30) des deux contacts (6, 8) s'interpénètrent et des flancs des prolongements de type en doigt comprennent des surfaces de contact du chemin de courant de l'arc électrique, les contacts ayant des prolongements de type en doigt étant dirigés le long d'un axe de coupure et il se produit dans l'état fermé le contact entre les surfaces de contact du chemin de courant permanent et des surfaces (24) de contact du chemin (18) de courant de l'arc électrique sont dans un état fermé du disjoncteur (2) disposées l'une par rapport à l'autre sans se toucher.

2. Utilisation d'un tube disjoncteur à vide suivant la revendication 1, **caractérisée en ce qu'**une pièce de contact du chemin (18) de courant de l'arc électrique comprend l'électrode (12) d'amorçage.

3. Utilisation d'un tube disjoncteur à vide suivant la revendication 1, **caractérisée en ce que** des surfaces (24) de contact du chemin (18) de courant de l'arc électrique ont une surface plus grande que les surfaces de contact du chemin de courant permanent.

4. Utilisation d'un tube disjoncteur à vide suivant la revendication 3, **caractérisée en ce que** les surfaces (24) de contact du chemin (18) de courant de l'arc électrique ont une surface au moins deux fois plus grande que les surfaces de contact du chemin de courant permanent.
